# EUROPÄISCHE PATENTSCHRIFT

(11) **EP 3 284 566 B1**
(45) Veröffentlichungstag und Bekanntmachung des Hinweises auf die Patenterteilung: **09.01.2019**
(21) Anmeldenummer: 16184547.4
(22) Anmeldetag: 17.08.2016
(51) Int. Cl.: B29B 7/74, B29B 7/40, B29B 7/48, B29B 7/60, B29B 7/72, B29B 7/88, B29C 47/08, B29C 47/36, B29C 47/10, B29B 9/06, B29B 9/12, B29C 47/92

(54) **VORRICHTUNG UND VERFAHREN ZUR WAHLWEISEN HERSTELLUNG EINER GEFÄRBTEN UND EINER UNGEFÄRBTEN KUNSTSTOFFSCHMELZE**
DEVICE AND METHOD FOR SELECTIVE PRODUCTION OF A COLOURED AND AN UNCOLOURED PLASTIC MELT
DISPOSITIF ET PROCÉDÉ POUR LA FABRICATION SÉLECTIVE D'UNE MATIÈRE PLASTIQUE FONDUE TEINTÉE OU NON-TEINTÉE

(43) Veröffentlichungstag der Anmeldung: 21.02.2018
(73) Patentinhaber: Coperion GmbH, 70469 Stuttgart (DE)
(72) Erfinder: CONRAD, Ulrich, 31008 Elze (DE); KERN, Norbert, 71732 Tamm (DE); SCHMUDDE, Markus, 71711 Murr (DE); STÖHRER, Bernhard, 74385 Pleidelsheim (DE); HORNBERGER, Heiko, 74394 Hessigheim (DE)
(74) Vertreter: Rau, Schneck & Hübner Patentanwälte Rechtsanwälte PartGmbB

(56) Entgegenhaltungen:
- EP-A1- 0 841 144
- EP-A1- 2 016 995
- WO-A2-2007/101359
- DE-A1-102007 050 681
- US-A- 5 053 176
- US-A- 5 232 960
- US-A1- 2008 093 763

## Beschreibung

Die Erfindung betrifft eine Vorrichtung und ein Verfahren zur wahlweisen Herstellung einer gefärbten und einer ungefärbten Kunststoff-Schmelze.

Aus der DE 10 2004 002 401 A1 ist eine Vorrichtung und ein Verfahren zur Herstellung von Kunststoff-Granulat aus einer Kunststoff-Schmelze bekannt. Die mittels einer Schneckenmaschine erzeugte Kunststoff-Schmelze wird in Form von Kunststoff-Strängen extrudiert und mittels einer Unterwasser-Granuliereinrichtung granuliert. Eine derartige Vorrichtung wird entweder ausschließlich zur Herstellung von gefärbtem Kunststoff-Granulat oder ausschließlich zur Herstellung von ungefärbtem, also naturfarbenem Kunststoff-Granulat verwendet. Eine wahlweise Herstellung von gefärbtem und ungefärbtem Kunststoff-Granulat ist nicht möglich, da ein bei der Herstellung einer gefärbten Kunststoff-Schmelze verwendetes Farbmittel eine nachfolgend hergestellte ungefärbte Kunststoff-Schmelze kontaminieren würde.

Aus der US 2008/0093763 A1 ist eine Vorrichtung zur Herstellung mehrfarbiger Faserkunststoffverbundprodukte bekannt. Die Vorrichtung umfasst einen Doppelschneckenextruder und zwei Zuführeinheiten. Zunächst wird ein Basispolymermaterial mittels der ersten Zuführeinheit in den Doppelschneckenextruder eingebracht. Dieses wird anschließend stromabwärts mit farbigem und mit Fasern versehenem Material vermischt, das mittels der zweiten Zuführeinheit in den Doppelschneckenextruder zugeführt wird. Die zweite Zuführeinheit umfasst mehrere Farbeinheiten, die mittels einer Steuereinheit gesteuert werden. Die Steuereinheit ermöglicht die sequenzielle Ausbringung von Farbstoffen und anderer Additive über die zweite Zuführeinheit. Zwischen zwei Schritten, in denen unterschiedlicher Farbstoff zugemischt wird, ist ein Verzögerungsschritt ausgebildet, in dem kein Farbstoff zugemischt wird. Der Verzögerungsschritt hat eine Zeitdauer zwischen 1 und 15 Sekunden, sodass die extrudierten Faserkunststoffverbundprodukte ein gewünschtes mehrfarbiges Aussehen haben, beispielsweise in Form von natürlichem Holz.

Aus der EP 0 841 144 A1 ist eine Extrusionsanlage mit einem Hauptextruder und einem Beispritzextruder bekannt, der über ein Dreiwegeventil mit dem Hauptextruder verbunden ist. Der Hauptextruder stellt eine nicht gefärbte Basisformmasse bereit, der über den Beispritzextruder und über das Dreiwegeventil eine konzentriert gefärbte Masterbatchformmasse zugeführt wird. Für einen Farbwechsel wird das Dreiwegeventil gespült, sodass die Farbwechselzeit minimiert wird und nach der Spülung eine neu gefärbte Masterbatchformmasse über das Dreiwegeventil in die Basisformmasse zugeführt werden kann.

Der Erfindung liegt die Aufgabe zugrunde, eine Vorrichtung zu schaffen, die in einfacher, flexibler und wirtschaftlicher Weise die wahlweise Herstellung einer gefärbten und einer ungefärbten Kunststoff-Schmelze ermöglicht.

Diese Aufgabe wird durch eine Vorrichtung mit den Merkmalen des Anspruchs 1 gelöst. Erfindungsgemäß wurde erkannt, dass die Mehrwellen-Schneckenmaschine im Bereich der mindestens zwei Gehäusebohrungen und der darin angeordneten mindestens zwei Behandlungselementwellen eine ausreichende Selbstreinigung aufweist, jedoch die Zuführung des Farbmittels in die mindestens zwei Gehäusebohrungen getrennt erfolgen muss, um eine Kontamination der ungefärbten Kunststoff-Schmelze durch restliches Farbmittel zu vermeiden. Durch die zwei separaten Zuführöffnungen werden das ungefärbte Kunststoffmaterial zur Bereitstellung bzw. Herstellung der ungefärbten Kunststoff-Schmelze und das Farbmittel zur Herstellung der gefärbten Kunststoff-Schmelze strikt getrennt voneinander in die mindestens zwei Gehäusebohrungen zugeführt. Durch das Auswählen des ersten Betriebsmodus oder des zweiten Betriebsmodus mittels der Steuereinrichtung werden die Dosiereinrichtungen derart angesteuert, dass entweder im ersten Betriebsmodus die gefärbte Kunststoff-Schmelze oder im zweiten Betriebsmodus die ungefärbte Kunststoff-Schmelze herstellbar ist. Die Dosiereinrichtungen sind mittels der Steuereinrichtung somit unabhängig voneinander betreibbar. Beispielsweise ist die Steuereinrichtung derart ausgebildet, dass wahlweise ausschließlich die erste Dosiereinrichtung oder ausschließlich die zweite Dosiereinrichtung oder beide Dosiereinrichtungen gemeinsam betreibbar sind. Dadurch, dass die mindestens zwei Behandlungselementwellen einander dicht kämmend ausgebildet sind, reinigen sich diese in einfacher Weise selbst. Dadurch, dass die mindestens zwei Behandlungselementwellen die Gehäuseinnenwand abstreifen, wird diese in einfacher Weise von den mindestens zwei Behandlungselementwellen gereinigt.

Im ersten Betriebsmodus wird mittels der ersten Dosiereinrichtung und/oder mittels der zweiten Dosiereinrichtung das ungefärbte Kunststoffmaterial in die Gehäusebohrungen zugeführt. Zusätzlich wird mittels der zweiten Dosiereinrichtung das Farbmittel durch die zweite Zuführöffnung in die Gehäusebohrungen zugeführt. Die gefärbte Kunststoff-Schmelze weist zwischen 0,5 Gew.-% und 10 Gew.-%, insbesondere zwischen 1 Gew.-% und 6 Gew.-%, und insbesondere zwischen 1,5 Gew.-% und 4 Gew.-% Farbmittel und zwischen 90 Gew.-% und 99,5 Gew.-%, insbesondere zwischen 94 Gew.-% und 99 Gew.-%, und insbesondere zwischen 96 Gew.-% und 98,5 Gew.-% ungefärbtes Kunststoffmaterial auf. Zusätzlich können der gefärbten Kunststoff-Schmelze andere Additive als das Farbmittel zugemischt werden, die in den oben angegebenen Gewichtsanteilen nicht berücksichtigt sind. Beispielsweise werden im ersten Betriebsmodus ein erster Anteil des Kunststoffmaterials mittels der ersten Dosiereinrichtung und ein zweiter Anteil des ungefärbten Kunststoffmaterials mittels der zweiten Dosiereinrichtung in die mindestens zwei Gehäusebohrungen zugeführt. Zusätzlich wird dem zweiten Anteil des ungefärbten Kunststoffmaterials das Farbmittel zugemischt und durch die zweite Zuführöffnung zugeführt. Der erste Anteil oder der zweite Anteil kann auch Null sein, sodass das gesamte ungefärbte Kunststoffmaterial im ersten Betriebsmodus durch die zweite Zuführöffnung oder die erste Zuführöffnung zugeführt wird. Das ungefärbte Kunststoffmaterial und das Farbmittel liegen beispielsweise als Schüttgut vor, insbesondere als Pulver und/oder Granulat. Das Farbmittel liegt beispielsweise als Masterbatch-Granulat bzw. Farb-Masterbatch-Granulat bzw. Farb-Granulat vor. Das Farbmittel ist beispielsweise Ruß.

Im zweiten Betriebsmodus wird ausschließlich das ungefärbte Kunststoffmaterial mittels der ersten Dosiereinrichtung durch die erste Zuführöffnung in die mindestens zwei Gehäusebohrungen zugeführt. Das Kunststoffmaterial ist beispielsweise als Schüttgut, insbesondere als Pulver und/oder Granulat ausgebildet.

Dadurch, dass lediglich eine einzige Mehrwellen-Schneckenmaschine benötigt wird, wird der maschinentechnische Aufwand erheblich reduziert, sodass die wahlweise Herstellung der gefärbten und der ungefärbten Kunststoff-Schmelze in einfacher und wirtschaftlicher Weise möglich ist. Die mindestens zwei Behandlungselementwellen sind insbesondere gleichsinnig drehantreibbar. Die Mehrwellen-Schneckenmaschine ist vorzugweise als Zweiwellen-Schneckenmaschine ausgebildet. Wird zunächst die ungefärbte Kunststoff-Schmelze hergestellt, ist die nachfolgende Herstellung der gefärbten Kunststoff-Schmelze einfach, schnell und flexibel möglich, da die gefärbte Kunststoff-Schmelze von der ungefärbten Kunststoff-Schmelze nicht kontaminiert wird. Wird demgegenüber zunächst die gefärbte Kunststoff-Schmelze hergestellt, so wird zur Herstellung der ungefärbten Kunststoff-Schmelze in einem Übergangszeitraum zunächst eine unreine Kunststoff-Schmelze hergestellt, da die Mehrwellen-Schneckenmaschine eine Selbstreinigung durchführt. Zur Selbstreinigung sind die mindestens zwei Behandlungselementwellen einander dicht kämmend und eine Gehäuseinnenwand abstreifend ausgebildet. Ist die Selbstreinigung nach dem Übergangszeitraum abgeschlossen, so wird ohne aufwändige Reinigungsmaßnahmen die ungefärbte Kunststoff-Schmelze hergestellt. In dem Übergangszeitraum wird die aus der Mehrwellen-Schneckenmaschine ausgetragene unreine Kunststoff-Schmelze beispielsweise granuliert und das erzeugte unreine Kunststoff-Granulat von dem erzeugten ungefärbten Kunststoff-Granulat und dem erzeugten gefärbten Kunststoff-Granulat separiert. Die Vorrichtung ermöglicht somit in einfacher, flexibler und wirtschaftlicher Weise eine wahlweise Herstellung der gefärbten und der ungefärbten Kunststoff-Schmelze.

Eine Vorrichtung nach Anspruch 2 gewährleistet eine einfache wahlweise Herstellung der gefärbten und der ungefärbten Kunststoff-Schmelze. In dem ersten Betriebsmodus steuert die Steuereinrichtung die zweite Dosiereinrichtung derart an, dass zumindest das erforderliche Farbmittel durch die zweite Zuführöffnung in die mindestens zwei Gehäusebohrungen zugeführt wird. Das erforderliche ungefärbte Kunststoffmaterial wird in dem ersten Betriebsmodus mittels mindestens einer der Dosiereinrichtungen zugeführt, vorzugsweise mittels der ersten und der zweiten Dosiereinrichtung. Zusätzlich können mittels mindestens einer der Dosiereinrichtungen andere Additive als das Farbmittel in die Gehäusebohrungen zugeführt werden. In dem zweiten Betriebsmodus steuert die Steuereinrichtung die erste Dosiereinrichtung derart an, dass das erforderliche ungefärbte Kunststoffmaterial ausschließlich durch die erste Zuführöffnung in die mindestens zwei Gehäusebohrungen zugeführt wird. Die zweite Dosiereinrichtung wird in dem zweiten Betriebsmodus von der Steuereinrichtung derart angesteuert, dass weder ein Farbmittel noch ungefärbtes Kunststoffmaterial durch die zweite Zuführöffnung zugeführt wird. Vorzugsweise wird die zweite Dosiereinrichtung in dem zweiten Betriebsmodus zumindest teilweise, insbesondere vollständig deaktiviert.

Eine Vorrichtung nach Anspruch 3 gewährleistet eine einfache, flexible und wirtschaftliche wahlweise Herstellung der gefärbten und der ungefärbten Kunststoff-Schmelze. Dadurch, dass die zweite Dosiereinrichtung eine Zuführ-Maschine umfasst, wird das Farbmittel einfach und flexibel in einer gewünschten Weise in die mindestens zwei Gehäusebohrungen zugeführt.

Eine Vorrichtung nach Anspruch 4 gewährleistet eine einfache, flexible und wirtschaftliche Herstellung der gefärbten Kunststoff-Schmelze mittels pulverförmigem Farbmittel. Das pulverförmige Farbmittel und das pulverförmige ungefärbte Kunststoffmaterial werden mit einer Farbmittel-Dosiereinheit und einer Kunststoffmaterial-Dosiereinheit in die Zuführ-Maschine dosiert. Die Zuführ-Maschine ist als einwellige Mischmaschine ausgebildet, die aus dem Farbmittel und dem ungefärbten Kunststoffmaterial ein homogenes Gemisch bzw. Pulver-Gemisch erzeugt. Das erzeugte Gemisch wird mittels der einwelligen Mischmaschine durch die zweite Zuführöffnung in die mindestens zwei Gehäusebohrungen zugeführt. Im zweiten Betriebsmodus werden die einwellige Mischmaschine sowie die Farbmittel-Dosiereinheit und die Kunststoffmaterial-Dosiereinheit vorzugsweise deaktiviert.

Eine Vorrichtung nach Anspruch 5 gewährleistet eine einfache, flexible und wirtschaftliche Herstellung der gefärbten Kunststoff-Schmelze mittels Farb-Masterbatch-Granulat. Als Farb-Masterbatch-Granulat wird eine granulatförmige Mischung aus dem Farbmittel und dem Kunststoffmaterial bezeichnet. Das Farbmittel liegt in dem Kunststoffmaterial in konzentrierter Form vor. Nachfolgend ist das Farb-Masterbatch-Granulat auch als Farb-Granulat bezeichnet. Das Farb-Masterbatch-Granulat wird mittels der Masterbatch-Dosiereinheit der Zuführ-Maschine zugeführt. Die Zuführ-Maschine ist als zweiwellige Schneckenmaschine ausgebildet, die das Farb-Masterbatch-Granulat dosiert in die mindestens zwei Gehäusebohrungen zuführt. Die zweiwellige Schneckenmaschine ist insbesondere als Seitenbeschickungs-Schneckenmaschine ausgebildet. Die zweiwellige Schneckenmaschine ist insbesondere gleichsinnig drehantreibbar. In dem zweiten Betriebsmodus wird die Masterbatch-Dosiereinheit deaktiviert. Die zweiwellige Schneckenmaschine wird in dem zweiten Betriebsmodus deaktiviert oder leer betrieben. Durch den leeren Betrieb wird das in den mindestens zwei Gehäusebohrungen vorliegende ungefärbte Kunststoffmaterial bzw. die ungefärbte Kunststoff-Schmelze in den mindestens zwei Gehäusebohrungen gehalten. Eine Kontamination aufgrund der zweiwelligen Schneckenmaschine erfolgt nicht, da das Farbmittel in dem Farb-Masterbatch-Granulat gebunden ist und die zweiwellige Schneckenmaschine aufgrund einer Selbstreinigung nicht mit restlichem Farb-Masterbatch-Granulat verunreinigt ist. Die zweiwellige Schneckenmaschine ist dicht kämmend und eine Gehäuseinnenwand dicht abstreifend ausgebildet.

Eine Vorrichtung nach Anspruch 6 oder 7 gewährleistet ebenfalls eine einfache, flexible und wirtschaftliche wahlweise Herstellung der gefärbten und der ungefärbten Kunststoff-Schmelze.

Eine Vorrichtung nach Anspruch 8 gewährleistet eine einfache, flexible und wirtschaftliche wahlweise Herstellung der gefärbten und der ungefärbten Kunststoff-Schmelze. Dadurch, dass die zweite Zuführöffnung der ersten Zuführöffnung nachgeordnet ist, ist eine vollständige Selbstreinigung der Behandlungselementwellen und der Gehäuseinnenwand des Gehäuses mittels des ungefärbten Kunststoffmaterials bzw. der ungefärbten Kunststoff-Schmelze einfach möglich. Zudem ist der durch Farbmittel kontaminierte Abschnitt der Mehrwellen-Schneckenmaschine möglichst kurz. Eine Vorrichtung nach Anspruch 9 gewährleistet eine einfache wahlweise Herstellung der gefärbten und der ungefärbten Kunststoff-Schmelze. Dadurch, dass zwischen den Zuführöffnungen auf den Wellen ausschließlich Schneckenelemente als Behandlungselemente drehfest angeordnet sind, ist der maschinentechnische Aufwand im Abschnitt zwischen den Zuführöffnungen gering. Das durch die erste Zuführöffnung zugeführte ungefärbte Kunststoffmaterial wird mittels der Schneckenelemente lediglich in einer Förderrichtung zu der zweiten Zuführöffnung gefördert. In dem ersten Betriebsmodus wird durch die zweite Zuführöffnung in gewünschter Weise Farbmittel und gegebenenfalls ungefärbtes Kunststoffmaterial zugeführt. In dem zweiten Betriebsmodus erfolgt durch die zweite Zuführöffnung keine Zuführung von Farbmittel und ungefärbtem Kunststoffmaterial.

Eine Vorrichtung nach Anspruch 10 gewährleistet eine einfache, flexible und wirtschaftliche wahlweise Herstellung der gefärbten und der ungefärbten Kunststoff-Schmelze. Dadurch, dass zwischen den Zuführöffnungen Knetelemente drehfest auf den Wellen angeordnet sind, wird das durch die erste Zuführöffnung zugeführte Kunststoffmaterial vor der zweiten Zuführöffnung bereits erwärmt und insbesondere zumindest teilweise oder vollständig aufgeschmolzen. In dem ersten Betriebsmodus ist der zusätzlich erforderliche Energieeintrag zum Aufschmelzen und Homogenisieren des Farbmittels und gegebenenfalls weiterem Kunststoffmaterial stromabwärts der zweiten Zuführöffnung gering. Hierdurch ist insbesondere der maschinentechnische Aufwand stromabwärts der zweiten Zuführöffnung gering. Die Knetelemente können als einzelne Knetscheiben und/oder als Knetblöcke ausgebildet sein. Der jeweilige Knetblock umfasst mehrere einteilig miteinander verbundene Knetscheiben.

Eine Vorrichtung nach Anspruch 11 gewährleistet eine einfache, flexible und wirtschaftliche wahlweise Herstellung der gefärbten und der ungefärbten Kunststoff-Schmelze. Die Schneckenelemente und die Knetelemente ermöglichen in einfacher Weise ein Aufschmelzen des Kunststoffmaterials und/oder ein Homogenisieren des Farbmittels und des Kunststoffmaterials. Die Knetelemente können als einzelne Knetscheiben und/oder als Knetblöcke ausgebildet sein. Der jeweilige Knetblock umfasst mehrere einteilig miteinander verbundene Knetscheiben.

Eine Vorrichtung nach Anspruch 12 gewährleistet eine einfache und flexible wahlweise Herstellung der gefärbten und der ungefärbten Kunststoff-Schmelze. Durch das Verschlusselement wird verhindert, dass in dem zweiten Betriebsmodus restliches Farbmittel, beispielsweise aufgrund von Vibrationen, durch die zweite Zuführöffnung in die mindestens zwei Gehäusebohrungen gelangt und das ungefärbte Kunststoffmaterial bzw. die ungefärbte Kunststoff-Schmelze kontaminiert.

Eine Vorrichtung nach Anspruch 13 gewährleistet eine einfache und flexible wahlweise Herstellung der gefärbten und der ungefärbten Kunststoff-Schmelze. Mittels des Verschlusselementantriebs wird das Verschlusselement bei der Umstellung von dem ersten Betriebsmodus auf den zweiten Betriebsmodus oder von dem zweiten Betriebsmodus auf den ersten Betriebsmodus automatisch betätigt. Das Verschlusselement ist beispielsweise verschwenkbar an dem Gehäuse angeordnet, sodass der Verschlusselementantrieb das Verschlusselement zum Öffnen und Verschließen der zweiten Zuführöffnung um eine Schwenkachse verschwenkt. Weiterhin ist das Verschlusselement beispielsweise mittels des Verschlusselementantriebs zum Öffnen und Verschließen der zweiten Zuführöffnung in mindestens einer Richtung linear verlagerbar.

Eine Vorrichtung nach Anspruch 14 gewährleistet eine einfache Herstellung der ungefärbten Kunststoff-Schmelze. Durch die Form des Verschlusselements ist in dem zweiten Betriebsmodus ein Abstreifen der Verschlusswand gewährleistet. Durch die Form bildet die Verschlusswand somit keine unerwünschten Toträume aus, in denen sich ungefärbtes Kunststoffmaterial bzw. ungefärbte Kunststoff-Schmelze in unerwünschter Weise ablagern könnten. Die Verschlusswand hat je nach Anordnung des Verschlusselements die Form von einer Gehäusebohrung oder von mehreren Gehäusebohrungen, insbesondere von zwei Gehäusebohrungen.

Der Erfindung liegt ferner die Aufgabe zugrunde, ein Verfahren zu schaffen, das in einfacher, flexibler und wirtschaftlicher Weise die wahlweise Herstellung einer gefärbten und einer ungefärbten Kunststoff-Schmelze ermöglicht.

Diese Aufgabe wird durch ein Verfahren mit den Merkmalen des Anspruchs 15 gelöst. Die Vorteile des erfindungsgemäßen Verfahrens entsprechen den bereits beschriebenen Vorteilen der erfindungsgemäßen Vorrichtung. Das Verfahren kann insbesondere auch mit den Merkmalen mindestens eines Anspruchs der Ansprüche bis 14 weitergebildet werden.

Weitere Merkmale, Vorteile und Einzelheiten der Erfindung ergeben sich aus der nachfolgenden Beschreibung mehrerer Ausführungsbeispiele. Es zeigen:
- Fig. 1: eine teilweise geschnitten dargestellte Vorrichtung zur Herstellung einer gefärbten und einer ungefärbten Kunststoff-Schmelze gemäß einem ersten Ausführungsbeispiel,
- Fig. 2: eine teilweise geschnittene Draufsicht auf eine MehrwellenSchneckenmaschine der Vorrichtung in Fig. 1,
- Fig. 3: eine Schnittdarstellung der Mehrwellen-Schneckenmaschine entlang einer Schnittlinie III-III in Fig. 2,
- Fig. 4: eine Schnittdarstellung im Bereich einer zweiten Zuführöffnung der Mehrwellen-Schneckenmaschine einer Vorrichtung gemäß einem zweiten Ausführungsbeispiel,
- Fig. 5: eine Schnittdarstellung im Bereich einer zweiten Zuführöffnung der Mehrwellen-Schneckenmaschine einer Vorrichtung gemäß einem dritten Ausführungsbeispiel,
- Fig. 6: eine Schnittdarstellung im Bereich einer zweiten Zuführöffnung der Mehrwellen-Schneckenmaschine einer Vorrichtung gemäß einem vierten Ausführungsbeispiel,
- Fig. 7: eine Schnittdarstellung im Bereich einer zweiten Zuführöffnung der Mehrwellen-Schneckenmaschine einer Vorrichtung gemäß einem fünften Ausführungsbeispiel,
- Fig. 8: eine teilweise geschnitten dargestellte Vorrichtung zur Herstellung einer gefärbten und einer ungefärbten Kunststoff-Schmelze gemäß einem sechsten Ausführungsbeispiel, und
- Fig. 9: eine teilweise geschnittene Draufsicht auf eine MehrwellenSchneckenmaschine der Vorrichtung in Fig. 8.

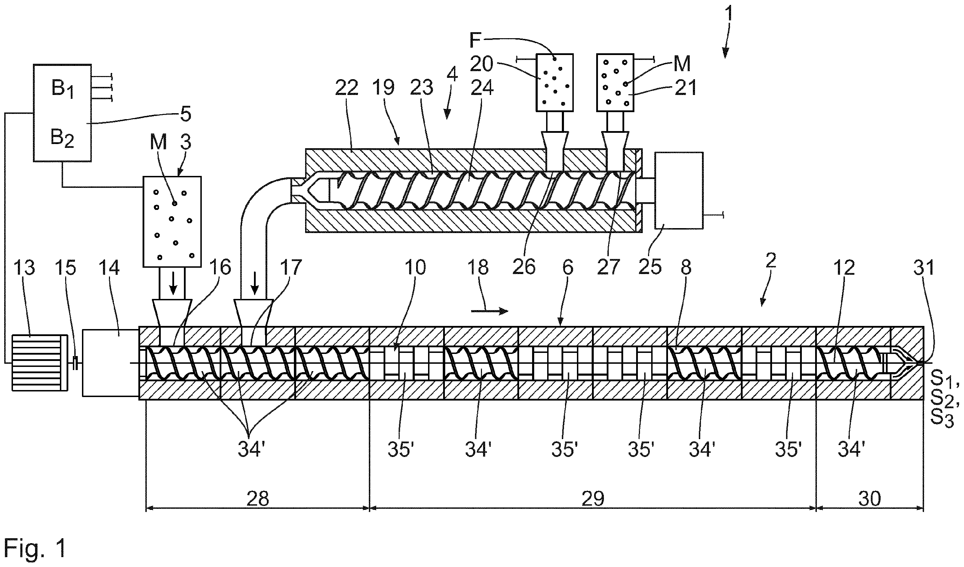

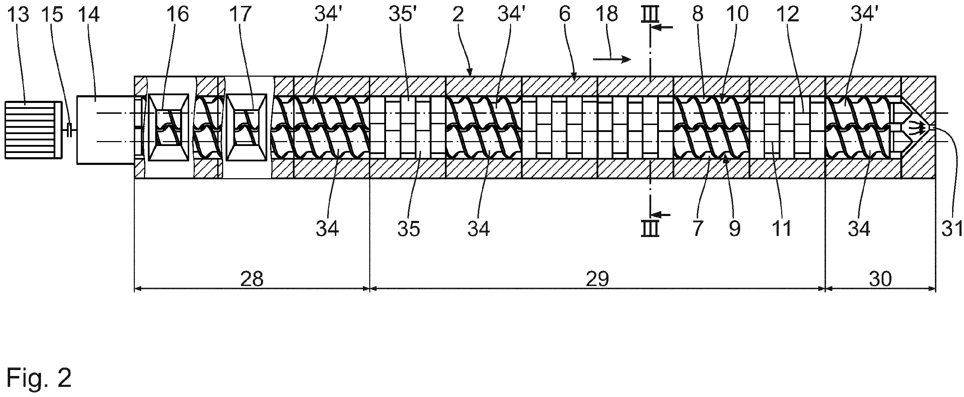

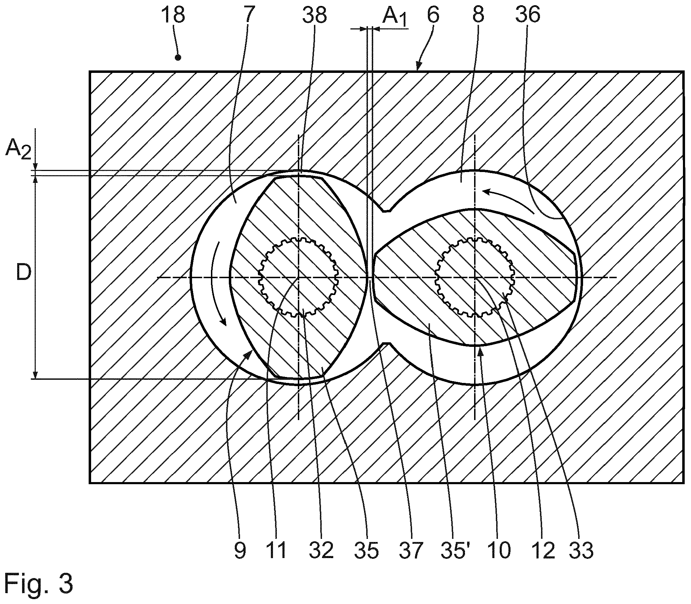

Nachfolgend ist anhand der Fig. 1 bis 3 ein erstes Ausführungsbeispiel der Erfindung beschrieben. Eine Vorrichtung 1 umfasst zur Herstellung einer gefärbten Kunststoff-Schmelze S₁ und einer ungefärbten Kunststoff-Schmelze S₂ eine Mehrwellen-Schneckenmaschine 2, eine erste Dosiereinrichtung 3, eine zweite Dosiereinrichtung 4 und eine Steuereinrichtung 5.

Die Mehrwellen-Schneckenmaschine 2 weist ein Gehäuse 6 auf, in dem zwei einander durchdringende Gehäusebohrungen 7, 8 ausgebildet sind. In den Gehäusebohrungen 7, 8 sind Behandlungselementwellen 9, 10 um zugehörige Drehachsen 11, 12 drehbar angeordnet. Die Behandlungselementwellen 9, 10 sind mittels eines Antriebsmotors 13 über ein Verteilergetriebe 14 gleichsinnig, also in gleichen Richtungen drehantreibbar. Zwischen dem Antriebsmotor 13 und dem Verteilergetriebe 14 ist eine Kupplung 15 angeordnet.

In dem Gehäuse 6 ist eine erste Zuführöffnung 16 und eine zweite Zuführöffnung 17 ausgebildet, die in die Gehäusebohrungen 7, 8 münden. Die zweite Zuführöffnung 17 ist in einer Förderrichtung 18 stromabwärts zu der ersten Zuführöffnung 16 angeordnet. Die erste Dosiereinrichtung 3 mündet in die erste Zuführöffnung 16 und dient zum Zuführen eines ungefärbten Kunststoffmaterials M durch die erste Zuführöffnung 16 in die Gehäusebohrungen 7, 8. Die erste Dosiereinrichtung 3 ist beispielsweise als gravimetrische Dosiereinheit ausgebildet.

Die zweite Dosiereinrichtung 4 umfasst eine Zuführ-Maschine 19, eine Farbmittel-Dosiereinheit 20 und eine Kunststoffmaterial-Dosiereinheit 21. Die zweite Dosiereinrichtung 4 bzw. die Zuführ-Maschine 19 mündet in die zweite Zuführöffnung 17. Mittels der zweiten Dosiereinrichtung 4 ist das ungefärbte Kunststoffmaterial M und/oder ein Farbmittel F durch die zweite Zuführöffnung 17 in die Gehäusebohrungen 7, 8 zuführbar.

Die Zuführ-Maschine 19 ist als einwellige Mischmaschine ausgebildet. Die Zuführ-Maschine 19 umfasst ein Gehäuse 22 mit einer Gehäusebohrung 23, in der eine Mischwelle 24 drehbar angeordnet ist. Die Mischwelle 24 ist mittels eines Antriebsmotors 25 drehantreibbar. Der Zuführ-Maschine 19 sind die Farbmittel-Dosiereinheit 20 und die Kunststoffmaterial-Dosiereinheit 21 vorgeordnet, die in die Gehäusebohrung 23 münden. Hierzu sind in dem Gehäuse 22 beispielsweise eine Farbmittel-Zuführöffnung 26 und eine Kunststoffmaterial-Zuführöffnung 27 ausgebildet. Die Farbmittel-Dosiereinheit 20 dient zum Dosieren des Farbmittels F in die Zuführ-Maschine 19. Entsprechend dient die Kunststoffmaterial-Dosiereinheit 21 zum Dosieren des ungefärbten Kunststoffmaterials M in die Zuführ-Maschine 19. Die Dosiereinheiten 20, 21 sind beispielsweise als gravimetrische Dosiereinheiten ausgebildet.

Die Schneckenmaschine 2 weist in der Förderrichtung 18 nacheinander eine Einzugszone 28, eine Aufschmelz- und Mischzone 29 und eine Austragszone 30 auf. Das Gehäuse 6 weist endseitig der Austragszone 30 eine Austragsöffnung 31 auf. Die Zuführöffnungen 16, 17 sind in der Einzugszone 28 angeordnet. Die Behandlungselementwellen 9, 10 umfassen jeweils eine zugehörige Welle 32, 33, auf denen paarweise nebeneinander Schneckenelemente 34, 34' und Knetelemente 35, 35' in der Förderrichtung 18 nacheinander drehfest angeordnet sind. In der Einzugszone 28 sind ausschließlich Schneckenelemente 34, 34' auf den Wellen 32, 33 drehfest angeordnet. In der Aufschmelz- und Mischzone 29 sind Schneckenelemente 34, 34' und Knetelemente 35, 35' drehfest auf den Wellen 32, 33 angeordnet. In der Austragszone 30 sind wiederum ausschließlich Schneckenelemente 34, 34' drehfest auf den Wellen 32, 33 angeordnet. Die Knetelemente 35, 35' sind beispielsweise als einzelne Knetscheiben und/oder als Knetblöcke mit mehreren einteilig miteinander verbundenen Knetscheiben ausgebildet.

Die Behandlungselementwellen 9, 10 sind einander dicht kämmend und eine Gehäuseinnenwand 36 des Gehäuses 6 abstreifend ausgebildet. Hierzu sind die Behandlungselementwellen 9, 10 derart zueinander angeordnet, dass ein von den Behandlungselementwellen 9, 10 begrenzter Spalt 37 - im Querschnitt betrachtet - eine Breite A₁ hat, wobei für die Breite A₁ im Verhältnis zu einem Außendurchmesser D der Behandlungselementwellen 9, 10 gilt: 0,003 ≤ A₁/D ≤ 0,05, insbesondere 0,004 ≤ A₁/D ≤ 0,035, und insbesondere 0,011 ≤ A₁/D ≤ 0,02.

Weiterhin bilden die Behandlungselementwellen 9, 10 mit der Gehäuseinnenwand 36 einen jeweiligen Spalt 38 aus, der - im Querschnitt betrachtet - eine zugehörige Breite A₂ hat, wobei für das Verhältnis der Breite A₂ zu dem Außendurchmesser D gilt: 0,004 ≤ A₂/D ≤ 0,03, insbesondere 0,005 ≤ A₂/D ≤ 0,025, und insbesondere 0,012 ≤ A₂/D ≤ 0,019.

Die Steuereinrichtung 5 dient zum Auswählen zwischen einem ersten Betriebsmodus B₁ zur Herstellung der gefärbten Kunststoff-Schmelze S₁ und einem zweiten Betriebsmodus B₂ zur Herstellung der ungefärbten Kunststoff-Schmelze S₂. Hierzu ist die Steuereinrichtung 5 in Signalverbindung mit der Mehrwellen-Schneckenmaschine 2, der ersten Dosiereinrichtung 3 und der zweiten Dosiereinrichtung 4. Die Steuereinrichtung 5 ist derart ausgebildet, dass in dem ersten Betriebsmodus B₁ mittels der zweiten Dosiereinrichtung 4 zumindest das Farbmittel F durch die zweite Zuführöffnung 17 in die mindestens zwei Gehäusebohrungen 7, 8 zuführbar ist und mittels der ersten Dosiereinrichtung 3 und/oder der zweiten Dosiereinrichtung 4 das ungefärbte Kunststoffmaterial M durch die erste Zuführöffnung 16 und/oder die zweite Zuführöffnung 17 zuführbar ist. Die Steuereinrichtung 5 ist weiterhin derart ausgebildet, dass in dem zweiten Betriebsmodus B₂ mittels der ersten Dosiereinrichtung 3 das ungefärbte Kunststoffmaterial M durch die erste Zuführöffnung 16 in die mindestens zwei Gehäusebohrungen zuführbar ist. In dem zweiten Betriebsmodus B₂ ist kein Farbmittel F in die Gehäusebohrungen 7, 8 zuführbar.

Die Funktionsweise der Vorrichtung 1 ist wie folgt:
Mittels der Steuereinrichtung 5 ist zwischen dem ersten Betriebsmodus B₁ und dem zweiten Betriebsmodus B₂ wählbar. Im ersten Betriebsmodus B₁ erfolgt die Herstellung der gefärbten Kunststoff-Schmelze S₁, wohingegen in dem zweiten Betriebsmodus B₂ die Herstellung der ungefärbten Kunststoff-Schmelze S₂ erfolgt.

In dem ersten Betriebsmodus B₁ wird der Mehrwellen-Schneckenmaschine 2 das ungefärbte Kunststoffmaterial M und das Farbmittel F zugeführt. Das ungefärbte Kunststoffmaterial M und das Farbmittel F gelangen in der Einzugszone 28 in die Gehäusebohrungen 7, 8 und werden in der Förderrichtung 18 in die Aufschmelz- und Mischzone 29 gefördert. In der Aufschmelz- und Mischzone 29 wird das Kunststoffmaterial M aufgeschmolzen und das Farbmittel F in das aufgeschmolzene Kunststoffmaterial M eingemischt, sodass die gefärbte Kunststoff-Schmelze S₁ entsteht. Die gefärbte Kunststoff-Schmelze S₁ wird anschließend in der Austragszone 30 durch die Austragsöffnung 31 ausgetragen. Anschließend wird die gefärbte Kunststoff-Schmelze S₁ beispielsweise in üblicher Weise granuliert und ein gefärbtes Kunststoff-Granulat erzeugt.

Das ungefärbte, also naturfarbene Kunststoffmaterial M ist ein Schüttgut und beispielsweise pulverförmig und/oder granulatförmig ausgebildet. Entsprechend liegt das Farbmittel F als Schüttgut vor und ist beispielsweise pulverförmig oder granulatförmig ausgebildet. Das Farbmittel F ist beispielsweise pulverförmiger Ruß. Die gefärbte Kunststoff-Schmelze S₁ weist zwischen 0,5 Gew.-% und 10 Gew.-%, insbesondere zwischen 1 Gew.-% und 6 Gew.-%, und insbesondere zwischen 1,5 Gew.-% und 4 Gew.-% Farbmittel F und zwischen 90 Gew.-% und 99,5 Gew.-%, insbesondere zwischen 94 Gew.-% und 99 Gew.-%, und insbesondere zwischen 96 Gew.-% und 98,5 Gew.-% ungefärbtes Kunststoffmaterial M auf. Zusätzlich können der gefärbten Kunststoff-Schmelze S₁ andere Additive als das Farbmittel F zugemischt werden, die in den oben angegebenen Gewichtsanteilen nicht berücksichtigt sind.

In einer ersten Variante des Betriebsmodus B₁ wird sowohl mittels der ersten Dosiereinrichtung 3 als auch mittels der zweiten Dosiereinrichtung 4 das ungefärbte Kunststoffmaterial M zugeführt. Mittels der ersten Dosiereinrichtung 3 wird das ungefärbte Kunststoffmaterial M durch die erste Zuführöffnung 16 in die Gehäusebohrungen 7, 8 zugeführt. Mittels der ersten Dosiereinrichtung 3 werden von dem gesamten ungefärbten Kunststoffmaterial M zwischen 40 Gew.-% und 90 Gew.-%, insbesondere zwischen 45 Gew.-% und 85 Gew.-%, und insbesondere zwischen 50 Gew.-% und 80 Gew.-% zugeführt. Mittels der Kunststoffmaterial-Dosiereinheit 21 wird das restliche ungefärbte Kunststoffmaterial M und mittels der Farbmittel-Dosiereinheit 20 das Farbmittel F in die Zuführ-Maschine 19 zugeführt und dort miteinander vermischt. Hierzu wird die Mischwelle 24 mit einer Drehzahl zwischen 200 U/min und 3500 U/min, insbesondere zwischen 350 U/min und 3000 U/min, und insbesondere zwischen 500 U/min und 2500 U/min drehangetrieben. Das Gemisch aus dem ungefärbten Kunststoffmaterial M und dem Farbmittel F wird über die zweite Zuführöffnung 17 in die Gehäusebohrungen 7, 8 zugeführt.

Bei einer zweiten Variante des ersten Betriebsmodus B₁ wird ausschließlich die zweite Dosiereinrichtung 4 betrieben und das gesamte ungefärbte Kunststoffmaterial M mittels der Kunststoffmaterial-Dosiereinheit 21 und das Farbmittel F mittels der Farbmittel-Dosiereinheit 20 der Zuführ-Maschine 19 zugeführt. Das erzeugte Gemisch aus dem gesamten Kunststoffmaterial M und dem Farbmittel F wird über die zweite Zuführöffnung 17 in die Gehäusebohrungen 8, 9 zugeführt.

Bei einer dritten Variante des ersten Betriebsmodus B₁ wird das gesamte ungefärbte Kunststoffmaterial M mittels der ersten Dosiereinrichtung 3 über die erste Zuführöffnung 16 und ausschließlich das Farbmittel F über die zweite Zuführöffnung 17 zugeführt.

Wird anschließend mittels der Steuereinrichtung 5 der zweite Betriebsmodus B₂ ausgewählt, wird die zweite Dosiereinrichtung 4 deaktiviert. Zur Herstellung der ungefärbten, also der naturfarbenen Kunststoff-Schmelze S₂ wird der Mehrwellen-Schneckenmaschine 2 ausschließlich mittels der ersten Dosiereinrichtung 3 das ungefärbte Kunststoffmaterial M zugeführt. In dem zweiten Betriebsmodus B₂ wird kein Farbmittel F zugeführt. In einem Übergangszeitraum findet nach der Umstellung eine Selbstreinigung der Mehrwellen-Schneckenmaschine 2 statt. Restliches Farbmittel F, das sich in den Gehäusebohrungen 7, 8, insbesondere an den Behandlungselementwellen 9, 10 und an der Gehäuseinnenwand 36 befindet, wird aufgrund der dicht kämmenden Ausbildung der Behandlungselementwellen 9, 10 und dem Abstreifen der Gehäuseinnenwand 36 mittels der Behandlungselementwellen 9, 10 aus der Mehrwellen-Schneckenmaschine 2 entfernt. In diesem Übergangzeitraum entsteht eine unreine Kunststoff-Schmelze S₃, die weder als gefärbte Kunststoff-Schmelze S₁ noch als ungefärbte Kunststoff-Schmelze S₂ verwertbar ist und deshalb separiert werden muss. Nach dem Übergangszeitraum ist die Selbstreinigung abgeschlossen, sodass in gewünschter Weise die ungefärbte Kunststoff-Schmelze S₂ erzeugt wird, indem das durch die erste Zuführöffnung 16 zugeführte Kunststoffmaterial M zu der Aufschmelz- und Mischzone 29 gefördert und dort aufgeschmolzen und anschließend in der Austragszone 30 ausgetragen wird.

Eine Umstellung von dem zweiten Betriebsmodus B₂ zu dem ersten Betriebsmodus B₁ ist in einfacher Weise möglich, da zur Herstellung der gefärbten Kunststoff-Schmelze S₁ keine Selbstreinigung der Mehrwellen-Schneckenmaschine 2 erforderlich ist.

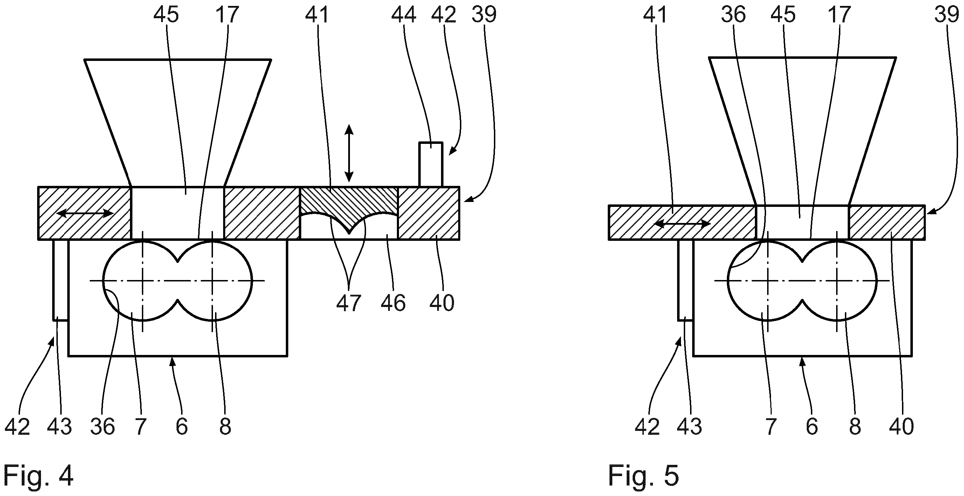

Nachfolgend ist anhand der Fig. 4 ein zweites Ausführungsbeispiel der Erfindung beschrieben. Im Unterschied zu dem vorgegangenen Ausführungsbeispiel weist die Vorrichtung 1 ein Verschlusselement 39 auf, das die zweite Zuführöffnung 17 im zweiten Betriebsmodus B₂ verschließt und im ersten Betriebsmodus B₁ öffnet. Das Verschlusselement 39 umfasst ein Trägerbauteil 40, ein Verschlussbauteil 41 und einen Verschlusselementantrieb 42 mit einem ersten Antriebsmotor 43 und einem zweiten Antriebsmotor 44. Das Trägerbauteil 40 weist zwei Durchgangsöffnungen 45, 46 auf, wobei in der Durchgangsöffnung 46 das Verschlussbauteil 41 verlagerbar angeordnet ist. Das Trägerbauteil 40 ist mittels des ersten Antriebsmotors 43 in einer horizontalen Richtung verlagerbar, sodass entweder die freie Durchgangsöffnung 45 oder die mit dem Verschlussbauteil 41 versehene Durchgangsöffnung 46 mit der zweiten Zuführöffnung 17 fluchtet. Im ersten Betriebsmodus B₁ wird das Trägerbauteil 40 mittels des Antriebsmotors 43 so verlagert, dass die freie Durchgangsöffnung 45 mit der zweiten Zuführöffnung 17 fluchtet, sodass die Zuführung durch die zweite Zuführöffnung 17 in die Gehäusebohrungen 7, 8 möglich ist. Beim Übergang in den zweiten Betriebsmodus B₂ wird das Trägerbauteil 40 mittels des ersten Antriebsmotors 43 in horizontaler Richtung derart verlagert, dass die Durchgangsöffnung 46 mit der zweiten Zuführöffnung 17 fluchtet. Anschließend wird das Verschlussbauteil 41 mittels des zweiten Antriebsmotors 44 in einer vertikalen Richtung verlagert, sodass die zweite Zuführöffnung 17 durch das Verschlussbauteil 41 verschlossen wird. Das Verschlussbauteil 41 weist eine Verschlusswand 47 auf, die entsprechend der Gehäuseinnenwand 36 geformt ist und die Gehäuseinnenwand 36 im Bereich der zweiten Zuführöffnung 17 ergänzt, sodass die Gehäusebohrungen 7, 8 von dem Gehäuse 6 und dem Verschlussbauteil 41 begrenzt sind. Durch die zweite Zuführöffnung 17 kann im zweiten Betriebsmodus B₂ - beispielsweise aufgrund von Vibrationen - kein restliches Farbmittel F in die Gehäusebohrungen 7, 8 gelangen. Beim Übergang in den ersten Betriebsmodus B₁ wird das Verschlussbauteil 41 und das Trägerbauteil 40 in umgekehrter Weise verlagert. Hinsichtlich des weiteren Aufbaus und der weiteren Funktionsweise wird auf das erste Ausführungsbeispiel verwiesen.

Nachfolgend ist anhand von Fig. 5 ein drittes Ausführungsbeispiel der Erfindung beschrieben. Im Unterschied zu dem vorangegangenen Ausführungsbeispiel weist das Trägerbauteil 40 lediglich die erste Durchgangsöffnung 45 auf und bildet mit einem Bereich seitlich neben der Durchgangsöffnung 45 das Verschlussbauteil 41 aus. Zum Verschließen und Öffnen der zweiten Zuführöffnung 17 wird das Trägerbauteil 40 mittels des Antriebsmotors 43 in der horizontalen Richtung seitlich verfahren, sodass entweder das Verschlussbauteil 41 oder die Durchgangsöffnung 45 oberhalb der zweiten Zuführöffnung 17 angeordnet ist. Hinsichtlich des weiteren Aufbaus und der weiteren Funktionsweise wird auf die vorangegangen Ausführungsbeispiele verwiesen.

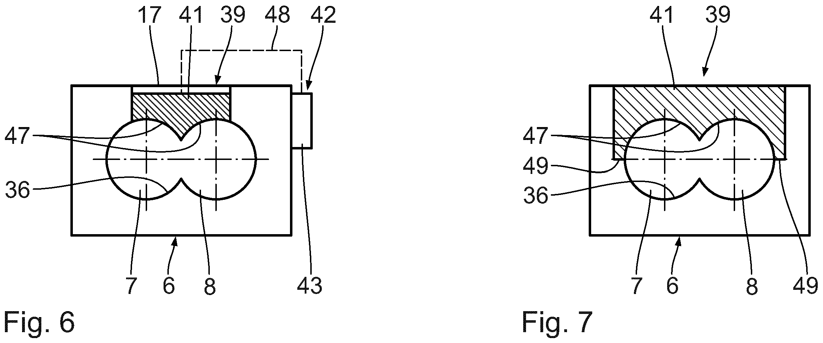

Nachfolgend ist anhand von Fig. 6 ein viertes Ausführungsbeispiel der Erfindung beschrieben. Das Verschlusselement 39 umfasst eine Führung 48, mittels der das Verschlussbauteil 41 geführt in die zweiten Zuführöffnung 17 verlagerbar ist. Die Führung 48 ist in Fig. 6 lediglich schematisch angedeutet. Die Führung 48 kann beliebig ausgebildet sein, beispielsweise als Schwenkgelenk. Das Verschlussbauteil 41 wird mittels des Antriebsmotors 43 entlang der Führung 48 zum Öffnen und Verschließen der zweiten Zuführöffnung 17 verlagert. Hinsichtlich des weiteren Aufbaus und der weiteren Funktionsweise wird auf die vorangegangen Ausführungsbeispiele verwiesen.

Nachfolgend ist anhand von Fig. 7 ein fünftes Ausführungsbeispiel der Erfindung beschrieben. Das Verschlussbauteil 41 wird zum Verschließen der zweiten Zuführöffnung 17 manuell montiert und zum Öffnen der zweiten Zuführöffnung 17 manuell demontiert. Das Gehäuse 6 bildet im Bereich der zweiten Zuführöffnung 17 einen Anschlag 49 für das Verschlussbauteil 41 aus, sodass dieses im montierten Zustand exakt positioniert ist. Hinsichtlich des weiteren Aufbaus und der weiteren Funktionsweise wird auf die vorangegangenen Ausführungsbeispiele verwiesen.

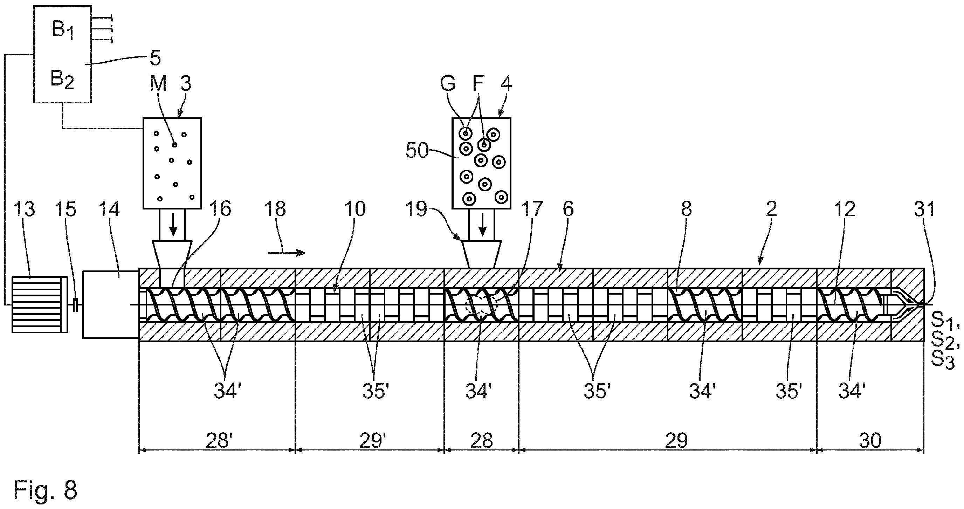

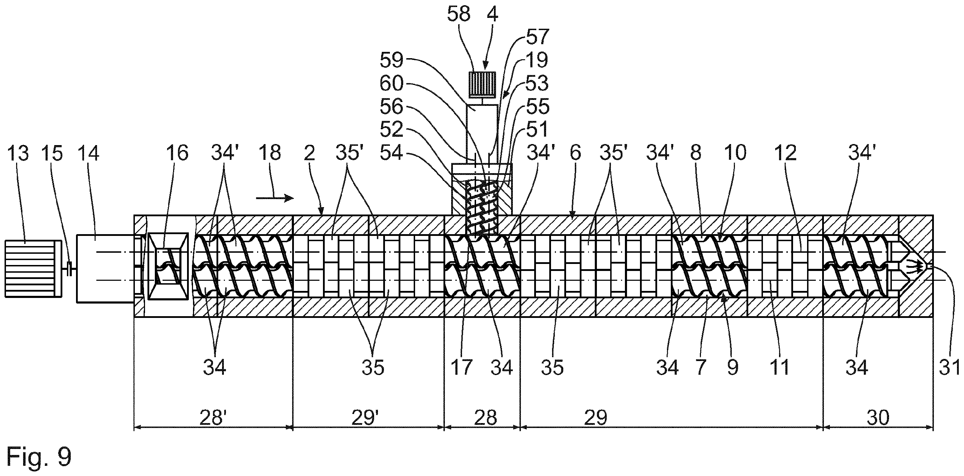

Nachfolgend ist anhand der Fig. 8 und 9 ein sechstes Ausführungsbeispiel der Erfindung beschrieben. Im Unterschied zu den vorangegangenen Ausführungsbeispielen weist die zweite Dosiereinrichtung 4 eine Masterbatch-Dosiereinheit 50 auf, die der Zuführ-Maschine 19 vorgeordnet ist. Die Zuführ-Maschine 19 ist als zweiwellige Schneckenmaschine ausgebildet. Diese umfasst ein Gehäuse 51 mit zwei darin ausgebildeten und einander durchdringenden Gehäusebohrungen 52, 53, in denen zwei Schneckenwellen 54, 50 um zugehörige Drehachsen 56, 57 drehbar angeordnet sind. Die Schneckenwellen 54, 55 werden mittels eines Antriebsmotors 58 über ein Verteilergetriebe 59 gleichsinnig, also in gleichen Drehrichtungen drehangetrieben. In dem Gehäuse 51 ist eine Zuführöffnung 60 ausgebildet, in die die Masterbatch-Dosiereinheit 50 mündet.

Die Mehrwellen-Schneckenmaschine 2 bildet in der Förderrichtung 18 nacheinander eine erste Einzugszone 28', eine Aufschmelzzone 29', eine zweite Einzugszone 28, die Aufschmelz- und Mischzone 29 und die Austragszone 30 aus. Im Bereich der ersten Einzugszone 28' sind ausschließlich Schneckenelemente 34, 34' drehfest auf den Wellen 32, 33 angeordnet. Demgegenüber sind in der Aufschmelzzone 29' ausschließlich Knetelemente 35, 35' drehfest auf den Wellen 32, 33 angeordnet. Die zweite Zuführöffnung 17 ist stromabwärts zu der ersten Zuführöffnung 16 in der zweiten Einzugszone 28 ausgebildet. Zwischen der ersten Zuführöffnung 16 und der zweiten Zuführöffnung 17 ist somit die Aufschmelzzone 29' angeordnet. Dementsprechend sind zwischen den Zuführöffnungen 16, 17 Schneckenelemente 34, 34' und Knetelemente 35, 35' drehfest auf den Wellen 32, 33 angeordnet. Die zweite Zuführöffnung 17 ist seitlich in dem Gehäuse 6 ausgebildet. Die Zuführ-Maschine 19 ist als zweiwellige Seitenbeschickungs-Schneckenmaschine ausgebildet.

Im ersten Betriebsmodus B₁ wird mittels der ersten Dosiereinrichtung 3 das ungefärbte Kunststoffmaterial M durch die erste Zuführöffnung 16 in die erste Einzugszone 28' zugeführt. Das Kunststoffmaterial M wird zu der Aufschmelzzone 29' gefördert und dort mittels der Knetelemente 35, 35' aufgeschmolzen. Dem aufgeschmolzenen Kunststoffmaterial M wird in der zweiten Einzugszone 28 mittels der zweiten Dosiereinrichtung 4 ein Farb-Masterbatch-Granulat G zugeführt. Das Masterbatch-Granulat G umfasst Kunststoffmaterial M und gebundenes Farbmittel F, das in dem Masterbatch-Granulat G konzentriert vorliegt. Das Masterbatch-Granulat G wird mittels der Masterbatch-Dosiereinheit 50 in die Zuführ-Maschine 19 zugeführt und mittels dieser durch die zweite Zuführöffnung 17 in die Gehäusebohrungen 7, 8 zugeführt. In der Aufschmelz- und Mischzone 29 wird das Masterbatch-Granulat G aufgeschmolzen und mit dem als Schmelze vorliegenden Kunststoffmaterial M homogenisiert. Anschließend wird die gefärbte Kunststoff-Schmelze S₁ in der Austragszone 30 ausgetragen. Die gefärbte Kunststoff-Schmelze S₁ weist zwischen 0,5 Gew.-% und 10 Gew.-%, insbesondere zwischen 1 Gew.-% und 6 Gew.-%, und insbesondere zwischen 1,5 Gew.-% und 4 Gew.-% Farbmittel F und zwischen 90 Gew.-% und 99,5 Gew.-%, insbesondere zwischen 94 Gew.-% und 99 Gew.-%, und insbesondere zwischen 96 Gew.-% und 98,5 Gew.-% ungefärbtes Kunststoffmaterial M auf. Zusätzlich können der gefärbten Kunststoff-Schmelze S₁ andere Additive als das Farbmittel F zugemischt werden, die in den oben angegebenen Gewichtsanteilen nicht berücksichtigt sind.

In dem zweiten Betriebsmodus B₂ wird mittels der zweiten Dosiereinrichtung 4 kein Farbmittel F bzw. kein Masterbatch-Granulat G zugeführt. In einer ersten Variante des zweiten Betriebsmodus B₂ wird die zweite Dosiereinrichtung 4 deaktiviert und die Zuführ-Maschine 19 demontiert. Die zweite Zuführöffnung 17 wird mittels eines Verschlusselements bzw. Verschlussbauteils verschlossen. Da die zweite Zuführöffnung 17 seitlich ausgebildet ist, ist die Verschlusswand entsprechend einer Gehäusebohrung 7 bzw. 8 geformt und begrenzt diese. Die Ausführungsbeispiele gemäß den Fig. 4 bis 7 sind auf das vorliegende Ausführungsbeispiel entsprechend anwendbar. Anschließend wird mittels der ersten Dosiereinrichtung 3 das ungefärbte Kunststoffmaterial M durch die erste Zuführöffnung 16 zugeführt und in der Aufschmelzzone 29' aufgeschmolzen, sodass mittels des aufgeschmolzenen Kunststoffmaterials M in der zweiten Einzugszone 28, in der Aufschmelz- und Mischzone 29 und in der Austragszone 30 in dem Übergangszeitraum die Selbstreinigung durchgeführt wird. Nach Abschluss der Selbstreinigung wird die ungefärbte Kunststoff-Schmelze S₂ hergestellt. In einer zweiten Variante des zweiten Betriebsmodus B₂ ist die Masterbatch-Dosiereinheit 50 deaktiviert und die Zuführ-Maschine 19 wird leer betrieben, sodass das aufgeschmolzene Kunststoffmaterial M in der zweiten Einzugszone 28 von den Schneckenwellen 54, 55 in den Gehäusebohrungen 7, 8 gehalten wird. Eine Demontage der Zuführ-Maschine 19 ist bei der zweiten Variante nicht erforderlich. Hinsichtlich des weiteren Aufbaus und der weiteren Funktionsweise wird auf die vorangegangenen Ausführungsbeispiele verwiesen.

Die erfindungsgemäße Vorrichtung 1 ermöglicht die wahlweise Herstellung einer gefärbten Kunststoff-Schmelze S₁ und einer ungefärbten Kunststoff-Schmelze S₂ mit lediglich einer einzigen Mehrwellen-Schneckenmaschine 2. Der maschinentechnische Aufwand ist hierdurch vergleichsweise gering. Wird von dem ersten Betriebsmodus B₁ auf den zweiten Betriebsmodus B₂ umgestellt, so entsteht während der Selbstreinigung in einem Übergangzeitraum eine unreine Kunststoff-Schmelze S₃. Das daraus hergestellte unreine Kunststoff-Granulat wird je nach Wirtschaftlichkeit verkauft oder bei einer nachfolgenden Herstellung der gefärbten Kunststoff-Schmelze S₁ über die zweite Zuführöffnung 17 wieder der Mehrwellen-Schneckenmaschine 2 zugeführt und weiterverarbeitet. Die Vorrichtung 1 ermöglicht somit eine einfache, flexible und wirtschaftliche Herstellung von wahlweise einer gefärbten Kunststoff-Schmelze S₁ und einer ungefärbten Kunststoff-Schmelze S₂.

## Patentansprüche

1. Vorrichtung zur wahlweisen Herstellung einer gefärbten und einer ungefärbten Kunststoff-Schmelze, umfassend
- eine Mehrwellen-Schneckenmaschine (2) zur Bereitstellung einer Kunststoff-Schmelze (S₁, S₂) mit
-- einem Gehäuse (6),
-- mindestens zwei in dem Gehäuse (6) ausgebildeten und einander durchdringenden Gehäusebohrungen (7, 8),
-- einer ersten Zuführöffnung (16) und einer zweiten Zuführöffnung (17), die in die mindestens zwei Gehäusebohrungen (7, 8) münden,
-- mindestens zwei in den Gehäusebohrungen (7, 8) drehantreibbar angeordneten Behandlungselementwellen (9, 10),
- eine erste Dosiereinrichtung (3) zum Zuführen eines ungefärbten Kunststoffmaterials (M) durch die erste Zuführöffnung (16) in die mindestens zwei Gehäusebohrungen (7, 8), und
- eine zweite Dosiereinrichtung (4) zum Zuführen zumindest eines Farbmittels (F) durch die zweite Zuführöffnung (17) in die mindestens zwei Gehäusebohrungen (7, 8),
**dadurch gekennzeichnet,**
**dass** die Behandlungselementwellen (9, 10) zwischen sich einen Spalt (37) ausbilden und für eine Breite A₁ des Spalts (37) im Verhältnis zu einem Außendurchmesser D der Behandlungselementwellen (9, 10) gilt: 0,003 ≤ A₁/D ≤ 0,05,
**dass** die Behandlungselementwellen (9, 10) mit einer Gehäuseinnenwand (36) des Gehäuses (6) einen Spalt (38) ausbilden und für eine Breite A₂ des Spalts (38) im Verhältnis zu dem Außendurchmesser D der Behandlungselementwellen (9, 10) gilt: 0,004 ≤ A₂/D ≤ 0,03, und **dass** die Vorrichtung (1) eine Steuereinrichtung (5) zum Auswählen zwischen einem ersten Betriebsmodus (B₁) zur Herstellung der gefärbten Kunststoff-Schmelze (S₁) und einem zweiten Betriebsmodus (B₂) zur Herstellung der ungefärbten Kunststoff-Schmelze (S₂) umfasst.

2. Vorrichtung nach Anspruch 1, **dadurch gekennzeichnet,**
**dass** die Steuereinrichtung (5) derart ausgebildet ist, dass
- in dem ersten Betriebsmodus (B₁) mittels der zweiten Dosiereinrichtung (4) zumindest das Farbmittel (F) durch die zweite Zuführöffnung (17) in die mindestens zwei Gehäusebohrungen (7, 8) und mittels mindestens einer der Dosiereinrichtungen (3, 4) das ungefärbte Kunststoffmaterial (M) zuführbar ist, und
- in dem zweiten Betriebsmodus (B₂) mittels der ersten Dosiereinrichtung (3) das ungefärbte Kunststoffmaterial (M) durch die erste Zuführöffnung (16) in die mindestens zwei Gehäusebohrungen (7, 8) zuführbar ist.

3. Vorrichtung nach Anspruch 1 oder 2, **dadurch gekennzeichnet,**
**dass** die zweite Dosiereinrichtung (4) eine Zuführ-Maschine (19) umfasst, die in die zweite Zuführöffnung (17) mündet.

4. Vorrichtung nach Anspruch 3, **dadurch gekennzeichnet,**
**dass** die Zuführ-Maschine (19) als einwellige Mischmaschine ausgebildet ist, der eine Farbmittel-Dosiereinheit (20) und eine Kunststoffmaterial-Dosiereinheit (21) vorgeordnet ist.

5. Vorrichtung nach Anspruch 3, **dadurch gekennzeichnet,**
**dass** die Zuführ-Maschine (19) als zweiwellige Schneckenmaschine ausgebildet ist, der eine Masterbatch-Dosiereinheit (50) vorgeordnet ist.

6. Vorrichtung nach einem der Ansprüche 1 bis 5, **dadurch gekennzeichnet,**
**dass** für A₁/D gilt: 0,004 ≤ A₁/D ≤ 0,035, und insbesondere 0,011 ≤ A₁/D ≤ 0,02.

7. Vorrichtung nach einem der Ansprüche 1 bis 6, **dadurch gekennzeichnet,**
**dass** für A₂/D gilt: 0,005 ≤ A₂/D ≤ 0,025, und insbesondere 0,012 ≤ A₂/D ≤ 0,019.

8. Vorrichtung nach einem der Ansprüche 1 bis 7, **dadurch gekennzeichnet,**
**dass** die zweite Zuführöffnung (17) in einer Förderrichtung (18) stromabwärts zu der ersten Zuführöffnung (16) angeordnet ist.

9. Vorrichtung nach Anspruch 8, **dadurch gekennzeichnet,**
**dass** die mindestens zwei Behandlungselementwellen (9, 10) jeweils eine Welle (32, 33) umfassen und zwischen den Zuführöffnungen (16, 17) Schneckenelemente (34, 34') drehfest auf den Wellen (32, 33) angeordnet sind.

10. Vorrichtung nach Anspruch 8 oder 9, **dadurch gekennzeichnet,**
**dass** die mindestens zwei Behandlungselementwellen (9, 10) jeweils eine Welle (32, 33) umfassen und zwischen den Zuführöffnungen (16, 17) Knetelemente (35, 35') drehfest auf den Wellen (32, 33) angeordnet sind.

11. Vorrichtung nach einem der Ansprüche 1 bis 10, **dadurch gekennzeichnet,**
**dass** die mindestens zwei Behandlungselementwellen (9, 10) jeweils eine Welle (32, 33) umfassen und stromabwärts der Zuführöffnungen (16, 17) Schneckenelemente (34, 34') und Knetelemente (35, 35') drehfest auf den Wellen (32, 33) angeordnet sind.

12. Vorrichtung nach einem der Ansprüche 1 bis 11, **gekennzeichnet durch** ein Verschlusselement (39) zum Verschließen der zweiten Zuführöffnung (17).

13. Vorrichtung nach Anspruch 12, **dadurch gekennzeichnet,**
**dass** das Verschlusselement (39) mittels eines Verschlusselementantriebs (42) betätigbar ist.

14. Vorrichtung nach Anspruch 12 oder 13, **dadurch gekennzeichnet, dass** das Verschlusselement (39) eine Verschlusswand (47) aufweist, die entsprechend einer Gehäuseinnenwand (36) geformt ist und mindestens eine der Gehäusebohrungen (7, 8) begrenzt.

15. Verfahren zur wahlweisen Herstellung einer gefärbten und einer ungefärbten Kunststoff-Schmelze unter Verwendung einer Vorrichtung gemäss Anspruch 1, mit den Schritten:
- Bereitstellen einer Mehrwellen-Schneckenmaschine (2) mit
-- einem Gehäuse (6),
-- mindestens zwei in dem Gehäuse (6) ausgebildeten und einander durchdringenden Gehäusebohrungen (7, 8),
-- einer ersten Zuführöffnung (16) und einer zweiten Zuführöffnung (17), die in die mindestens zwei Gehäusebohrungen (7, 8) münden,
-- mindestens zwei in den Gehäusebohrungen (7, 8) drehantreibbar angeordneten Behandlungselementwellen (9, 10), wobei
--- die Behandlungselementwellen (9, 10) zwischen sich einen Spalt (37) ausbilden und für eine Breite A₁ des Spalts (37) im Verhältnis zu einem Außendurchmesser D der Behandlungselementwellen (9, 10) gilt: 0,003 ≤ A₁/D ≤ 0,05,
--- die Behandlungselementwellen (9, 10) mit einer Gehäuseinnenwand (36) des Gehäuses (6) einen Spalt (38) ausbilden und für eine Breite A₂ des Spalts (38) im Verhältnis zu dem Außendurchmesser D der Behandlungselementwellen (9, 10) gilt: 0,004 ≤ A₂/D ≤ 0,03,
- Bereitstellen einer ersten Dosiereinrichtung (3) und einer zweiten Dosiereinrichtung (4),
- Auswählen zwischen einem ersten Betriebsmodus (B₁) zur Herstellung der gefärbten Kunststoff-Schmelze (S₁) und einem zweiten Betriebsmodus (B₂) zur Herstellung der ungefärbten Kunststoff-Schmelze (S₂) mittels einer Steuereinrichtung (5), wobei
-- in dem ersten Betriebsmodus (B₁) mittels der zweiten Dosiereinrichtung (4) zumindest ein Farbmittel (F) durch die zweite Zuführöffnung (17) in die mindestens zwei Gehäusebohrungen (7, 8) und mittels mindestens einer der Dosiereinrichtungen (3, 4) ein ungefärbtes Kunststoffmaterial (M) zugeführt wird, und
-- in dem zweiten Betriebsmodus (B₂) mittels der ersten Dosiereinrichtung (3) das ungefärbtes Kunststoffmaterial (M) durch die erste Zuführöffnung (16) in die mindestens zwei Gehäusebohrungen (7, 8) zugeführt wird, und
- Betreiben der Mehrwellen-Schneckenmaschine (2) und der Dosiereinrichtungen (3, 4) in dem ausgewählten Betriebsmodus (B₁, B₂).

## Claims

1. Device for the selective production of a colored and an uncolored plastic melt, comprising
- a multi-shaft screw extruder (2) for providing a plastic melt (S₁, S₂), comprising
-- a housing (6),
-- at least two housing bores (7, 8) formed in the housing (6) such as to penetrate one another,
-- a first feed opening (16) and a second feed opening (17) leading into the at least two housing bores (7, 8),
-- at least two treatment element shafts (9, 10) arranged in the housing bores (7, 8) in such a way as to be rotatably drivable,
- a first metering device (3) for feeding an uncolored plastic material (M) into the at least two housing bores (7, 8) via the first feed opening (16), and
- a second metering device (4) for feeding at least one colorant (F) into the at least two housing bores (7, 8) via the second feed opening (17),
**characterized in**
**that** the treatment element shafts (9, 10) form a gap (37) arranged therebetween, a width A₁ of the gap (37) relative to an external diameter D of the treatment element shafts (9, 10) being such that 0.003 ≤ A₁/D ≤ 0.05,
**that** the treatment element shafts (9, 10) form a gap (38) with a housing inner wall (36) of the housing (6), a width A₂ of the gap (38) relative to the external diameter D of the treatment element shafts (9, 10) being such that 0.004 ≤ A₂/D ≤ 0.03, and
**that** the device (1) comprises a control device (5) for selecting between a first mode of operation (B₁) for producing the colored plastic melt (S₁) and a second mode of operation (B₂) for producing the uncolored plastic melt (S₂).

2. Device as claimed in claim 1, **characterized in that** the control device (5) is configured such that
- in the first mode of operation (B₁), at least the colorant (F) is feedable into the at least two housing bores (7, 8) via the second feed opening (17) by means of the second metering device (4), and the uncolored plastic material (M) is feedable by means of at least one of the metering devices (3, 4), and
- in the second mode of operation (B₂), the uncolored plastic material (M) is feedable into the at least two housing bores (7, 8) via the first feed opening (16) by means of the first metering device (3).

3. Device as claimed in claim 1 or 2, **characterized in that** the second metering device (4) comprises a feed machine (19), which leads into the second feed opening (17).

4. Device as claimed in claim 3, **characterized in that** the feed machine (19) is configured as a single-shaft mixing machine, with a colorant metering unit (20) and a plastic material metering unit (21) being arranged upstream thereof.

5. Device as claimed in claim 3, **characterized in that** the feed machine (19) is configured as a double-shaft screw extruder, with a masterbatch metering unit (50) being arranged upstream thereof.

6. Device as claimed in any one of claims 1 to 5, **characterized in that** A₁/D is such that 0.004 ≤ A₁/D ≤ 0.035, and in particular 0.011 ≤ A₁/D ≤ 0.02.

7. Device as claimed in any one of claims 1 to 6, **characterized in that** A₂/D is such that 0.005 ≤ A₂/D ≤ 0.025, and in particular 0.012 ≤ A₂/D ≤ 0.019.

8. Device as claimed in any one of claims 1 to 7, **characterized in that** the second feed opening (17) is arranged downstream of the first feed opening (16) in a conveying direction (18).

9. Device as claimed in claim 8, **characterized in that** the at least two treatment element shafts (9, 10) each comprise one shaft (32, 33), with screw elements (34, 34') being arranged non-rotatably on the shafts (32, 33) between the feed openings (16, 17).

10. Device as claimed in claim 8 or 9, **characterized in that** the at least two treatment element shafts (9, 10) each comprise one shaft (32, 33), with kneading elements (35, 35') being arranged non-rotatably on the shafts (32, 33) between the feed openings (16, 17).

11. Device as claimed in any one of claims 1 to 10, **characterized in that** the at least two treatment element shafts (9, 10) each comprise one shaft (32, 33), with screw elements (34, 34') and kneading elements (35, 35') being arranged non-rotatably on the shafts (32, 33) downstream of the feed openings (16, 17).

12. Device as claimed in any one of claims 1 to 11, **characterized by** a closure element (39) for closing the second feed opening (17).

13. Device as claimed in claim 12, **characterized in that** the closure element (39) is actuable by means of a closure element drive (42).

14. Device as claimed in claim 12 or 13, **characterized in that** the closure element (39) has a closure wall (47), which is formed such as to correspond to a housing inner wall (36) and defines at least one of the housing bores (7, 8).

15. Method for the selective production of a colored and an uncolored plastic melt using a device as claimed in claim 1, the method comprising the steps of
- providing a multi-shaft screw extruder (2) with
-- a housing (6),
-- at least two housing bores (7, 8) formed in the housing (6) such as to penetrate one another,
-- a first feed opening (16) and a second feed opening (17) leading into the at least two housing bores (7, 8),
-- at least two treatment element shafts (9, 10) arranged in the housing bores (7, 8) in such a way as to be rotatably drivable, wherein
--- the treatment element shafts (9, 10) form a gap (37) arranged therebetween, a width A₁ of the gap (37) relative to an external diameter D of the treatment element shafts (9, 10) being such that 0.003 ≤ A₁/D ≤ 0.05,
--- the treatment element shafts (9, 10) form a gap (38) with a housing inner wall (36) of the housing (6), a width A₂ of the gap (38) relative to the external diameter D of the treatment element shafts (9, 10) being such that 0.004 ≤ A₂/D ≤ 0.03,
- providing a first metering device (3) and a second metering device (4),
- selecting, by means of a control device (5), between a first mode of operation (B₁) for producing the colored plastic melt (S₁) and a second mode of operation (B₂) for producing the uncolored plastic melt (S₂), wherein
-- in the first mode of operation (B₁), at least one colorant (F) is fed into the at least two housing bores (7, 8) via the second feed opening (17) by means of the second metering device (4), and an uncolored plastic material (M) is fed by means of at least one of the metering devices (3, 4), and
- in the second mode of operation (B₂), the uncolored plastic material (M) is fed into the at least two housing bores (7, 8) via the first feed opening (16) by means of the first metering device (3), and
- operating the multi-shaft screw extruder (2) and the metering devices (3, 4) in the selected mode of operation (B₁, B₂).

## Revendications

1. Dispositif de fabrication sélective d'une matière plastique fondue colorée et d'une matière plastique fondue non colorée, comprenant :
- une extrudeuse à vis sans fin à plusieurs arbres (2) pour fournir une matière plastique fondue (S₁, S₂) avec
• un boîtier (6)
• au moins deux alésages (7, 8) s'interpénétrant mutuellement dans le boîtier (6)
• une première ouverture d'alimentation (16) et une seconde ouverture d'alimentation (17) qui débouchent dans les au moins deux alésages (7,8)
• au moins deux arbres d'élément de traitement (9, 10) entraînables en rotation, disposés dans les alésages (7, 8),
- un premier dispositif de dosage (3) pour l'acheminement d'une matière plastique non colorée (M) à travers la première ouverture d'alimentation (16) dans les au moins deux alésages (7, 8) et
- un second dispositif de dosage (4) pour l'acheminement d'au moins colorant (F) à travers la seconde ouverture d'alimentation (17) dans les au moins deux alésages (7, 8),
**caractérisé en ce que** les arbres d'élément de traitement (9, 10) forment entre eux un espace (37) et **en ce que** la relation suivante s'applique à une largeur A₁ de l'espace (37) par rapport à un diamètre externe D des arbres d'élément de traitement (9, 10) : 0,003 ≤ A₁/D ≤ 0,05
**en ce que** les arbres d'élément de traitement (9, 10) forment avec une paroi interne (36) du boîtier (6) un espace (38) et **en ce que** la relation suivante s'applique à une largeur A₂ de l'espace (38) par rapport au diamètre externe D des arbres d'élément de traitement (9, 10) : 0,004 ≤ A₂/D ≤ 0,03
et **en ce que** le dispositif (1) comprend un dispositif de commande (5) pour choisir entre un premier mode de fonctionnement (B₁) pour fournir la matière plastique fondue colorée (S₁) et un second mode de fonctionnement (B₂) pour fournir la matière plastique fondue non colorée (S₂).

2. Dispositif selon la revendication 1, **caractérisé en ce que** le dispositif de commande (5) est conçu de façon que :
- dans le premier mode de fonctionnement (B₁), on peut acheminer au moins le colorant (F) au moyen du second dispositif de dosage (4) à travers la seconde ouverture d'alimentation (17) dans les au moins deux alésages (7, 8) et la matière plastique non colorée (M) au moyen d'au moins un des dispositifs de dosage (3, 4), et
- dans le second mode de fonctionnement (B₂), on peut acheminer la matière plastique non colorée (M) au moyen du premier dispositif de dosage (3) à travers la première ouverture d'alimentation (16) dans les au moins deux alésages (7, 8).

3. Dispositif selon la revendication 1 ou 2, **caractérisé en ce que** le second dispositif de dosage (4) comprend une machine d'alimentation (19) qui débouche dans la seconde ouverture d'alimentation (17).

4. Dispositif selon la revendication 3, **caractérisé en ce que** la machine d'alimentation (19) est conçue comme un mélangeur à arbre unique qui précède une unité de dosage de colorant (20) et une unité de dosage de matière plastique (21).

5. Dispositif selon la revendication 3, **caractérisé en ce que** la machine d'alimentation (19) est conçue comme un mélangeur à deux arbres qui précède une unité de dosage de mélange maître (50).

6. Dispositif selon une des revendications 1 à 5, **caractérisé en ce que** pour A₁/D : 0,004 ≤ A₁/D ≤ 0,035, et en particulier 0,011 ≤ A₁/D ≤ 0,02.

7. Dispositif selon une des revendications 1 à 6, **caractérisé en ce que** pour A₂/D : 0,005 ≤ A₂/D ≤ 0,025, et en particulier 0,012 ≤ A₂/D ≤ 0,019.

8. Dispositif selon une des revendications 1 à 7, **caractérisé en ce que** la seconde ouverture d'alimentation (17) est disposée dans une direction de transport (18) en aval vers la première ouverture d'alimentation (16).

9. Dispositif selon la revendication 8, **caractérisé en ce que** les au moins deux arbres d'élément de traitement (9, 10) comprennent respectivement un arbre (32, 33), et des vis sans fin (34, 34') sont disposés de manière fixe sur les arbres (32, 33) entre les ouvertures d'alimentation (16, 17).

10. Dispositif selon la revendication 8 ou 9, **caractérisé en ce que** les au moins deux arbres d'élément de traitement (9, 10) comprennent respectivement un arbre (32, 33), et des éléments pétrisseurs (35, 35') sont disposés de manière fixe sur les arbres (32, 33) entre les ouvertures d'alimentation (16, 17).

11. Dispositif selon une des revendications 1 à 10, **caractérisé en ce que** les au moins deux arbres d'élément de traitement (9, 10) comprennent respectivement un arbre (32, 33), et des vis sans fin (34, 34') et des éléments pétrisseurs (35, 35') sont disposés de manière fixe sur les arbres (32, 33) en aval des ouvertures d'alimentation (16, 17).

12. Dispositif selon une des revendications 1 à 11, **caractérisé par** un élément de verrouillage (39) pour verrouiller la seconde ouverture d'alimentation (17).

13. Dispositif selon la revendication 12, **caractérisé en ce que** l'élément de verrouillage (39) est actionnable au moyen d'un moteur d'élément de verrouillage (42).

14. Dispositif selon la revendication 12 ou 13, **caractérisé en ce que** l'élément de verrouillage (39) comporte une paroi de verrouillage (47) correspondant à la forme d'une paroi interne du boîtier (36) et délimite au moins un des alésages (7, 8).

15. Procédé de fabrication sélective d'une matière plastique fondue colorée et d'une matière plastique fondue non colorée par utilisation d'un dispositif selon la revendication 1, avec les étapes suivantes :
- Préparation d'une extrudeuse à vis sans fin à plusieurs arbres (2) comportant :
• un boîtier (6)
• au moins deux alésages (7, 8) s'interpénétrant dans le boîtier (6)
• une première ouverture d'alimentation (16) et une seconde ouverture d'alimentation (17) qui débouchent dans les au moins deux alésages (7,8)
• au moins deux arbres d'élément de traitement (9, 10) entraînables en rotation, disposés dans les alésages (7, 8), où
- les arbres d'élément de traitement (9, 10) forment entre eux un espace (37) et la relation suivante s'applique à une largeur A₁ de l'espace (37) par rapport à un diamètre externe D des arbres d'élément de traitement (9, 10) :
0,003 ≤ A₁/D ≤ 0,05
- les arbres d'élément de traitement (9, 10) forment avec une paroi interne (36) du boîtier (6) un espace (38) et la relation suivante s'applique à une largeur A₂ de l'espace (38) par rapport au diamètre externe D des arbres d'élément de traitement (9, 10) :
0,004 ≤ A₂/D ≤ 0,03
- Préparation d'un premier dispositif de dosage (3) et d'un second dispositif de dosage (4)
- Choix entre un premier mode de fonctionnement (B₁) pour fournir la matière plastique fondue colorée (S₁) et un second mode de fonctionnement (B₂) pour fournir la matière plastique fondue non colorée (S₂) au moyen d'un dispositif de commande (5), où
• dans le premier mode de fonctionnement (B₁), au moins un colorant (F) est acheminé au moyen du second dispositif de dosage (4) à travers la seconde ouverture d'alimentation (17) dans les au moins deux alésages (7, 8) et une matière plastique non colorée (M) est acheminée au moyen d'au moins un des dispositifs de dosage (3, 4), et
• dans le second mode de fonctionnement (B₂), la matière plastique non colorée (M) est acheminée au moyen du premier dispositif de dosage (3) à travers la première ouverture d'alimentation (16) dans les au moins deux alésages (7, 8), et
- Fonctionnement de l'extrudeuse à vis sans fin à plusieurs arbres (2) et des dispositifs de dosage (3, 4) dans le mode de fonctionnement choisi (B₁, B₂).
